# EUROPEAN PATENT SPECIFICATION

(11) **EP 2 116 787 B1**
(45) Date of publication and mention of the grant of the patent: **19.10.2011**
(21) Application number: 09159739.3
(22) Date of filing: 08.05.2009
(51) Int. Cl.: F24F 7/08, F24F 11/00, F24F 3/044

(54) **Air conditioning unit and air conditioning system comprising the same**
Klimaanlageneinheit und Klimaanlagensystem damit
Unité de climatisation et système de climatisation la comportant

(30) Priority: 08.05.2008 KR 20080042913
(43) Date of publication of application: 11.11.2009
(73) Proprietor: LG Electronics Inc., Seoul 150-721 (KR)
(72) Inventor: Lee, Gi Seop, 153-802 Seoul (KR); Yang, Dong Jun, 153-802 Seoul (KR); Yang, Dong Keun, 153-802 Seoul (KR)
(74) Representative: Vossius & Partner

(56) References cited:
- JP-A- 2004 144 333
- JP-A- 2004 144 334
- JP-A- 2007 225 145
- US-A- 5 267 897
- US-A1- 2003 199 244

## Description

The present disclosure relates to an air conditioning system, and more particularly, to an air conditioning unit for heating/cooling and ventilating an indoor space and an air conditioning system including the same.

An air conditioner is an appliance for heating/cooling an indoor space. An air conditioning system for heating/cooling a plurality of indoor spaces is known (see for example patent document JP-2007 225145-A). The air conditioning system generally includes one air conditioning unit and a plurality of outdoor units connected to the air conditioning unit. In addition, the air conditioning unit of the air conditioning system includes components for ventilating the indoor space. A known air conditioning unit utilizes two separate fans and fan drive motors. A first fan and its associated drive motor have at least two functions. Firstly, they pull-in return air from an indoor space into a first chamber and push some or all of that air to a second chamber. They secondly selectively exhaust the some of the air not pushed to the second chamber to an outdoor space. A second fan and its associated drive motor, also have at least two different functions. Firstly, they exhaust air from the second chamber into the indoor space. Secondly, they selectively pull-in air from the outdoor space, if outdoor air is admitted to the second chamber, and exhaust that air to the indoor space. The known air conditioning unit is necessarily large enough to house the two sets of fans and drive motors and thus requires an installation area that is correspondingly large. What is needed is a simpler unit that is less expensive and has a smaller installation area. Despite a long felt need for such a simpler unit, one is not known to exist. In part, this may be due to an inability to provide the multiple functions of the two sets of fans and drive motors with only one fan and its associated drive motor.

Embodiments provide an air conditioning unit with a further simple configuration and an air conditioning system including the same.

In one embodiment, an air conditioning unit according to claim 1 is described.
In another embodiment, an air conditioning system includes an air conditioning unit according to claim 1.

The details of one or more embodiments are set forth in the accompanying drawings and the description below. Other features will be apparent from the description and drawings, and from the claims.

Fig. 1 is a view illustrating a configuration of a ventilation mode of an air conditioning system.

Fig. 2 is a view illustrating a configuration of a heat-exchange mode of an air conditioning system.

Fig. 3 is a view illustrating a configuration of an air conditioning system according to an embodiment.

Reference will now be made in detail to the embodiments of the present disclosure, examples of which are illustrated in the accompanying drawings.

The invention represents a novel and non-obvious solution to the problems faced by the inventors in that the elimination of one fan, while retaining its function, permits the reduction in size of the air conditioning unit that was long sought for. Moreover, the solution to the problem unexpectedly results in manufacturing cost savings, as only one fan and one motor are required. Additionally, the solution results in maintenance savings over the lifetime of the unit as the unit's owner will only need to maintain one fan and one motor.

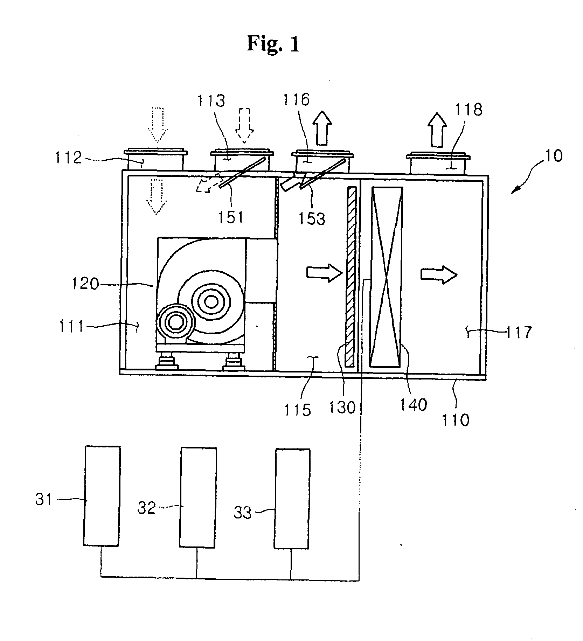

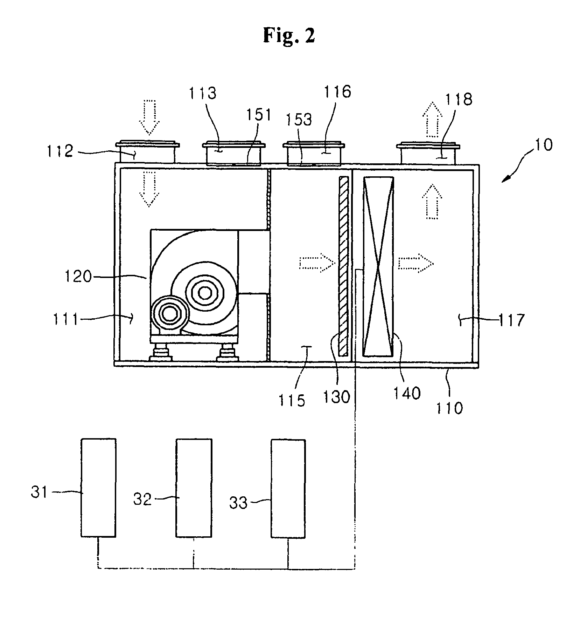

Fig. 1 is a view illustrating a configuration of a ventilation mode of an air conditioning system according to a first embodiment. Fig. 2 is a view illustrating a configuration of a heat-exchange mode of an air conditioning system according to the first embodiment.

Referring to Figs. 1 and 2, an air conditioning system includes one air conditioning unit 10 and a plurality of outdoor units 31, 32, and 33. The air conditioning unit 10 may be configured to heat/cool and ventilate a plurality of indoor spaces. The plurality of outdoor units 31, 32, 33 may be connected to the air conditioning unit 10. Although three outdoor units 31, 32, 33 are connected to the air conditioning unit 10 in the first embodiment, the number of outdoor units 31, 32, 33 is not limited thereto as more or less than three outdoor units are acceptable. Although not shown, various components such as an outdoor heat-exchanger and a compressor may be installed in each of the outdoor units 31, 32, 33.

A suction chamber 111 is disposed inside a casing 110 of the air conditioning unit 10. The suction chamber provides a space for suctioning air from an indoor space (hereinafter, referred to as "indoor air") and air from an outdoor space (hereinafter, referred to as "outdoor air"). For this, the suction chamber 111 communicates with the indoor space and the outdoor space through an indoor suction hole 112 and an outdoor suction hole 113, respectively. Substantially, the indoor suction hole 112 and the outdoor suction hole 113 are connected to a duct (not shown) communicating with the indoor space or the outdoor space, respectively. In the suction chamber 111, the indoor air pulled-in through the indoor suction hole 112 and the outdoor air pulled-in through the outdoor suction hole 113 are mixed.

A first exhaust chamber 115 is disposed inside the casing 110. The first exhaust chamber 115 provides a space that communicates with the suction chamber 111 and receives air (hereinafter, referred to as "mixed air") in which the indoor air and the outdoor air are mixed within the suction chamber 111 to exhaust a portion of the mixed air to the outdoor space. For this, the first exhaust chamber 115 communicates with the outdoor space through an outdoor exhaust hole 116.

A second exhaust chamber 117 communicating with the first exhaust chamber 115 is disposed inside the casing 110. The second exhaust chamber 117 provides a space in which the air passing through the first exhaust chamber 115 is received to heat-exchange the received air with an indoor heat-exchanger 140, which will be described later, and exhaust the heat-exchanged air into the indoor space. For this, the second exhaust chamber 117 communicates with the indoor space through an indoor exhaust hole 118.

A fan 120 is disposed inside the suction chamber 111. The fan 120 generates an air flow between the inside of the casing 100, i.e., the suction chamber 111 and the first and second exhaust chambers 115 and 117 and the indoor space and/or the outdoor space. In detail, when the fan 120 is driven, the indoor air is pulled-in from the indoor space to the suction chamber 111 through the indoor suction hole 112, the outdoor air is pulled-in from the outdoor space to the suction chamber 111 through the outdoor suction hole 113, the mixed air is exhausted from the first exhaust chamber 115 to the outdoor space through the outdoor exhaust hole 116, and the mixed air is exhausted from the second exhaust chamber 117 to the indoor space through the indoor exhaust hole 118.

A filter 130 is disposed inside the first exhaust chamber 115. The filter 130 filters various foreign substances contained within the mixed air that flows through the first exhaust chamber 115 and transferred into the second exhaust chamber 117.

The indoor heat-exchanger 140 is disposed inside the second exhaust chamber 117. The indoor heat-exchanger 140 is heat-exchanged with the mixed air transferred from the first exhaust chamber 115 to the second exhaust chamber 117 to cool and heat the mixed air.

Dampers 151 and 153 are disposed on the outdoor suction hole 113 and the outdoor exhaust hole 116, respectively. For convenience in description, the damper 151 disposed on the outdoor suction hole 113 will be referred to as a first damper 151, and the damper 153 disposed on the outdoor exhaust hole 116 will be referred to as a second damper 153. The first and second dampers 151 and 153 selectively open and close the outdoor suction hole 113 or the outdoor exhaust hole 116. They may be incrementally positioned so as to control an opening degree of the outdoor suction hole 113 or the outdoor exhaust hole 116. Thus, the first and second dampers 151 and 153 open and close the outdoor suction hole 113 or the outdoor exhaust hole 116, and, by the degree to which they are opened, control the opening degree of the outdoor suction hole 113 or the outdoor exhaust hole 116 to determine a ventilation state and a ventilation rate.

In this embodiment, the opening/closing states or opening degrees of the outdoor suction hole 113 and the outdoor exhaust hole 116 are determined and controlled according to rotation angles of the first and second dampers 151 and 153 with respect to center portions thereof, but it need not necessarily be limited thereto. For example, opening/closing states or the opening degrees of the outdoor suction hole 113 and the outdoor exhaust hole 116 may be determined and controlled according to rotation angles of one end of a damper with respect to the other end thereof.

An operation of the air conditioning system according to the first embodiment will now be described in detail with reference to accompanying drawings.

Referring to Fig. 1, in a case where a user selects a ventilation mode, heating/cooling and ventilation operations, or a ventilation only operation, are/is performed by the air conditioning system. In case of the ventilation mode, the indoor suction hole 113 and the outdoor suction hole 116 are opened by the selective positioning of the first and second dampers 151 and 153. The angle to which the first and second dampers 151 and 153 are opened controls the opening degrees of the outdoor suction hole 113 and the outdoor exhaust hole 116, and thus controls the ventilation rate.

The fan 120 driven when the outdoor suction hole 113 and the outdoor exhaust hole 116 are opened. Thus, the indoor air is pulled-into the suction chamber 111 through the indoor suction hole 112. At same time, the outdoor air is pulled-into the suction chamber 111 through the outdoor suction hole 113. The indoor air and the outdoor air pulled-into the suction chamber 111 are mixed with each other to generate mixed air.

The mixed air within the suction chamber 111 is transferred into the first exhaust chamber 115 due to a continuous drive of the fan 120. A portion of the mixed air transferred into the first exhaust chamber 115 passes through the filter 130 due to the drive of the fan 120 and thus the filtered mixed air is transferred into the second exhaust chamber 117. Foreign substances are filtered from the mixed air by operation of the filter. The remaining portion of the mixed air that was transferred into the first exhaust chamber 115 is exhausted to the outdoor space through the outdoor exhaust hole 116 due to the drive of the fan 120.

A portion of the mixed air transferred from the first exhaust chamber 115 to the second exhaust chamber 117 is heat-exchanged as the mixed air passes through the indoor heat-exchanger 140. Of course, in case where the user does not select a heating/cooling mode, the mixed air is not heat-exchanged even though the mixed air passes through the indoor heat-exchanger 140. The mixed air that was heat-exchanged while passing through the indoor heat-exchanger 140 is exhausted into the indoor space through the indoor exhaust hole 118. Thus, air of the indoor space is heated or cooled and simultaneously ventilated, or only ventilated.

Referring to Fig. 2, in case where the user selects the heating/cooling mode, the indoor suction hole 113 and the outdoor exhaust hole 116 are shielded by a closed position of the first and second dampers 151 and 153, respectively. Thus, only the heating/cooling operation is performed, and the ventilation operation is not performed.

In detail, when the fan 120 is driven, the indoor air is pulled-into the suction chamber 111 through the indoor suction hole 112. As described above, since the outdoor suction hole 113 is shielded by the first damper 151, the outdoor air is not pulled-into the suction chamber 111 through the outdoor suction hole 113 even through the fan 120 is driven. The indoor air pulled-in as described above is transferred into the first exhaust chamber 115 due to the continuous drive of the fan 120.

The indoor air transferred into the first exhaust chamber 115 passes through the filter 130 to transfer the filtered indoor air into the second exhaust chamber 117. Foreign substances are filtered from the air by operation of the filter. However, since the outdoor exhaust hole 116 is shielded, the indoor air transferred into the second exhaust chamber 117 is not exhausted into the outdoor space through the outdoor exhaust hole 116. That is, in the heating/cooling mode, the ventilation operation using the outdoor exhaust hole 116 is not performed.

The indoor air transferred into the second exhaust chamber 117 is heat-exchanged as the indoor air passes through the indoor heat-exchanger 140. The indoor air, heat-exchanged by passing through the heat-exchanger 140, is exhausted into the indoor space through the indoor exhaust hole 118 due to the drive of the fan 120. Therefore, the heating or cooling of the indoor space is achieved.

A configuration of an air conditioning system according to a second embodiment will now be described in detail with reference to accompanying drawings.

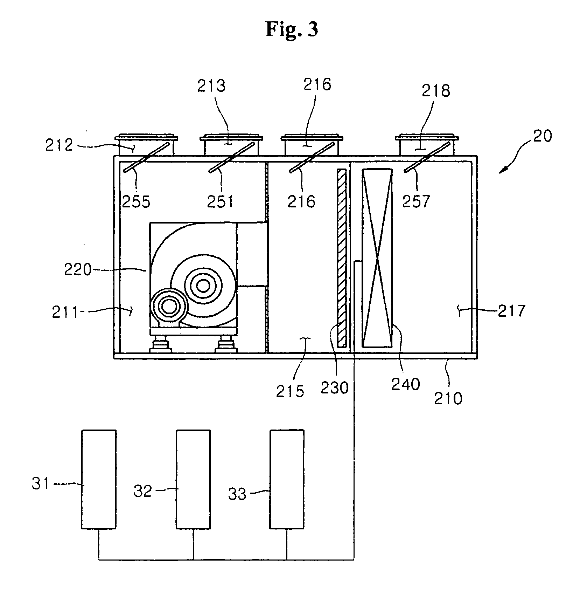

Fig. 3 is a view illustrating a configuration of an air conditioning system according to a second embodiment.

Referring to Fig. 3, it is possible to control opening/closing states and opening degrees of an outdoor suction hole 213 and an outdoor exhaust hole 216 as well as an indoor suction hole 212 and an indoor exhaust hole 218. For this, the opening degrees of the outdoor suction hole 213 and the outdoor exhaust hole 216 are controlled by first and second dampers 251 and 253. An opening/closing or opening degree of the indoor suction hole 212 and the indoor exhaust hole 218 are selectively controlled by third and fourth dampers 255 and 257, respectively.

In detail, a casing 210 of an air conditioning unit 20 includes a suction chamber 211, a first exhaust chamber 215, and a second exhaust chamber 217. The suction chamber 211 communicates with an indoor space and an outdoor space through an indoor suction hole 212 and an outdoor suction hole 213, respectively. The first exhaust chamber 215 communicates with the outdoor space through the outdoor exhaust hole 216. The second exhaust chamber 217 communicates with the indoor space through an indoor exhaust hole 218. A fan 220 is disposed inside the suction chamber 211, and a filter 230 and an indoor heat-exchanger 240 are disposed inside the first and second exhaust chambers 215 and 217, respectively.

In this embodiment, the opening/closing states or opening degrees of the indoor suction hole 212 and the indoor exhaust hole 218 are controlled by third and fourth dampers 255 and 257, respectively. Thus, a rate of indoor air pulled-into the suction chamber 211 through the indoor suction hole 212 and outdoor air pulled-into the suction chamber 211 through the outdoor suction hole 213 due to a drive of the fan 220 is further precisely controlled to precisely control a ventilation rate.

In the second embodiment, although the opening degrees of both the indoor suction hole and the indoor exhaust hole are controlled by the dampers, the precise control of the ventilation rate can be predicted as long as the opening degree of only the indoor suction hole is substantially controlled by the damper.

In the first and second embodiments, although the filter is disposed inside the first exhaust chamber, it need not necessarily be limited thereto. Because the filter filters the foreign substances contained within air supplied into the indoor space, it does not matter where the filter is positioned inside the casing corresponding between the outdoor suction hole and the indoor exhaust hole.

According to the present disclosure, the air conditioning system represents a solution to the problems faced by the inventors in that the elimination of one fan, while retaining its function, permits a reduction in size of the air conditioning unit that was long sought for but never achieved. Moreover, the solution to the problem unexpectedly results in manufacturing cost savings, as only one fan and one motor are required, and subsequent maintenance savings, as only one fan and one motor need to be maintained.

As described above, in the air conditioning unit and the air conditioning system including the same, one fan is configured to both: pull-in air from an indoor space and selectively exhaust a portion of that air to an outdoor space; and selectively pull in air from an outdoor space, mix that air with the air pulled in from the indoor space and exhaust the mixed air to the indoor space. Thus, the configuration of an air conditioning system can be simplified in comparison to the known art, while preserving functionality, reducing manufacturing costs, and increasing operational reliability in relation to known art designs.

Although embodiments have been described with reference to a number of illustrative embodiments thereof, it should be understood that numerous other modifications and embodiments could be devised by those skilled in the art that will fall within the scope of the appended claims.

## Claims

1. An air conditioning unit comprising:
a casing (210), comprising:
an indoor suction hole (212), through which air is pulled-in from an indoor space;
an outdoor suction hole (213), through which air is pulled-in from an outdoor space;
an outdoor exhaust hole (216), in which a portion of air pulled-in through the indoor and outdoor suction holes or the indoor suction hole is selectively exhausted into the outdoor space; and
an indoor exhaust hole (218), in which the rest of the air pulled-in through the indoor and outdoor suction holes or the indoor suction hole is exhausted into the indoor space;
one fan (220) for pulling-in air through the indoor suction hole (212) and outdoor suction hole (213) and exhausting air through the outdoor exhaust hole (216) and the indoor exhaust hole (218); and
one drive motor operationally coupled to the fan (220).
a first damper (251), operationally coupled to the outdoor suction hole (213), wherein a degree of opening of the first damper (251) is control lable;
a second damper (253), operationally coupled to the outdoor exhaust hole (216), wherein a degree of opening of the second damper (253) is controllable;
the air conditioning unit **characterized by** comprising a third damper (255), operationally coupled to the indoor suction hole (212), wherein a degree of opening of the third damper (255) is controllable;
a fourth damper (257), operationally coupled to the indoor exhaust hole (218), wherein a degree of opening of the fourth damper is controllable

2. The air conditioning unit according to claim 1, further comprising:
a heat-exchanger, configured to:
receive and pass air pulled-in by the fan through the indoor and outdoor suction holes; and
selectively heat-exchange the air that passes through the heat-exchanger and is exhausted into the indoor space through the indoor exhaust hole by the fan (220).

3. The air conditioning unit according to claim 1 or 2, wherein the indoor suction hole (212), the outdoor suction hole (213), the outdoor exhaust hole (216), and the indoor exhaust hole (218) are sequentially disposed in an airflow direction due to the fan (220).

4. The air conditioning unit according to any of claims 1 to 3, wherein the heat-exchanger is disposed between the outdoor exhaust hole (216) and the indoor exhaust hole (218).

5. An air conditioning system comprising:
an air conditioning unit (20) of any one of claims 1 to 4; and
one or more outdoor units comprising an outdoor heat-exchanger connected to the heat-exchanger.

## Patentansprüche

1. Klimaeinheit, die aufweist:
ein Gehäuse (210), das aufweist:
ein Innenansaugloch (212), durch das Luft aus einem Innenraum eingesaugt wird;
ein Außenansaugloch (213), durch das Luft aus einem Außenraum eingesaugt wird;
ein Außenausstoßloch (216), in dem ein Anteil der durch die Innen- und Außenansauglöcher oder das Innenansaugloch eingesaugten Luft selektiv in den Außenraum ausgestoßen wird; und
ein Innenausstoßloch (218), in dem der Rest der durch die Innen- und Außenansauglöcher oder das Innenansaugloch eingesaugten Luft in den Innenraum ausgestoßen wird;
einen Ventilator (220) zum Einsaugen von Luft durch das Innenansaugloch (212) und das Außenansaugloch (213) und Ausstoßen der Luft durch das Außenausstoßloch (216) und das Innenausstoßloch (218);
einen Antriebsmotor, der wirksam mit dem Ventilator (220) gekoppelt ist;
eine erste Luftklappe (251), die wirksam mit dem Außenansaugloch (213) gekoppelt ist, wobei ein Öffnungsgrad der ersten Luftklappe (251) steuerbar ist; und
eine zweite Luftklappe (253), die wirksam mit dem Außenausstoßloch (216) gekoppelt ist, wobei ein Öffnungsgrad der zweiten Luftklappe (253) steuerbar ist;
wobei die Klimaeinheit **dadurch gekennzeichnet ist, dass** sie aufweist
eine dritte Luftklappe (255), die wirksam mit dem Innenansaugloch (212) gekoppelt ist, wobei ein Öffnungsgrad der dritten Luftklappe (255) steuerbar ist; und
eine vierte Luftklappe (257), die wirksam mit dem Innenausstoßloch (218) gekoppelt ist, wobei ein Öffnungsgrad der vierten Luftklappe steuerbar ist.

2. Klimaeinheit nach Anspruch 1, die ferner aufweist:
einen Wärmetauscher, der konfiguriert ist:
durch den Ventilator eingesaugte Luft aufzunehmen und durch die Innen- und Außenansauglöcher zu schicken; und
selektiv die Luft wärmezutauschen, die durch den Wärmetauscher geht und durch das Innenausstoßloch durch den Ventilator (220) in den Innenraum ausgestoßen wird.

3. Klimaeinheit nach Anspruch 1 oder 2, wobei das Innenansaugloch (212), das Außenansaugloch (213), das Außenausstoßloch (216) und das Innenausstoßloch (218) in eine auf den Ventilator (220) zurückzuführende Luftstromrichtung hintereinander angeordnet sind.

4. Klimaeinheit nach einem der Ansprüche 1 bis 3, wobei der Wärmetauscher zwischen dem Außenausstoßloch (216) und dem Innenausstoßloch (218) angeordnet ist.

5. Klimaanlage, die aufweist:
eine Klimaeinheit (20) nach einem der Ansprüche 1 bis 4; und
eine oder mehrere Außeneinheiten, die einen Außenwärmetauscher aufweisen, der mit dem Wärmetauscher verbunden ist.

## Revendications

1. Unité de climatisation comprenant :
un boîtier (210) comprenant :
un trou d'aspiration intérieur (212) à travers lequel l'air est ramené d'un espace intérieur ;
un trou d'aspiration extérieur (213) à travers lequel l'air est ramené d'un espace extérieur ;
un trou d'échappement extérieur (216) dans lequel une partie de l'air ramené par les trous d'aspiration intérieur et extérieur ou le trou d'aspiration intérieur est sélectivement évacué dans l'espace extérieur ; et
un trou d'échappement intérieur (218), dans lequel le reste de l'air ramené par les trous d'aspiration intérieur et extérieur ou le trou d'aspiration intérieur est évacué dans l'espace intérieur ;
un ventilateur (220) pour ramener l'air par le trou d'aspiration intérieur (212) et le trou d'aspiration extérieur (213) et évacuer l'air par le trou d'échappement extérieur (216) et le trou d'échappement intérieur (218) ; et
un moteur d'entraînement couplé de manière opérationnelle au ventilateur (220) ;
un premier registre (251), couplé de manière opérationnelle au trou d'aspiration extérieur (213), dans laquelle un degré d'ouverture du premier registre (251) est contrôlable ;
un deuxième registre (253) couplé de manière opérationnelle au trou d'échappement extérieur (216), dans laquelle un degré d'ouverture du deuxième registre (253) est contrôlable ;
l'unité de climatisation étant **caractérisée en ce qu'**elle comprend :
un troisième registre (255), couplé de manière opérationnelle au trou d'aspiration intérieur (212), dans laquelle un degré d'ouverture du troisième registre (255) est contrôlable ;
un quatrième registre (257), couplé de manière opérationnelle au trou d'échappement intérieur (218), dans laquelle un degré d'ouverture du quatrième registre est contrôlable.

2. Unité de climatisation selon la revendication 1, comprenant en outre :
un échangeur de chaleur configuré pour :
recevoir et laisser passer l'air ramené par le ventilateur par les trous d'aspiration intérieur et extérieur ; et
échanger sélectivement la chaleur de l'air qui passe par l'échangeur de chaleur et qui est évacué dans l'espace intérieur par le trou d'échappement intérieur par le ventilateur (220).

3. Unité de climatisation selon la revendication 1 ou 2, dans laquelle le trou d'aspiration intérieur (212), le trou d'aspiration extérieur (213), le trou d'échappement extérieur (216) et le trou d'échappement intérieur (218) sont disposés de manière séquentielle dans une direction d'écoulement d'air due au ventilateur (220).

4. Unité de climatisation selon l'une quelconque des revendications 1 à 3, dans laquelle l'échangeur de chaleur est disposé entre le trou d'échappement extérieur (216) et le trou d'échappement intérieur (218).

5. Système de climatisation comprenant :
une unité de climatisation (20) selon l'une quelconque des revendications 1 à 4 ; et
une ou plusieurs unités extérieures comprenant un échangeur de chaleur extérieur raccordé à l'échangeur de chaleur.
